# EUROPEAN PATENT APPLICATION

(11) **EP 4 524 326 A1**
(43) Date of publication of application: **19.03.2025**
(21) Application number: 24198542.3
(22) Date of filing: 05.09.2024
(51) Int. Cl.: E02F 9/08, E02F 9/20

(54) **ELECTRIC WORK MACHINE**

(30) Priority: 14.09.2023 JP 2023149539
(71) Applicant: Yanmar Holdings Co., Ltd., Osaka-shi, Osaka (JP)
(72) Inventor: KANAI, Daiki, Chikugo-shi (JP); MURAOKA, Hiroyuki, Chikugo-shi (JP)
(74) Representative: Dennemeyer & Associates S.A.

(57) **Abstract**

[Problem] Provided is an electric work machine in which while an electric motor is cooled preferentially, other devices arranged in an inner part of a body can also be cooled, and the installation of a large battery unit is allowed so that the battery capacity can be increased.

[Solution] A hydraulic excavator as an electric work machine has a body in which a first opening part and a second opening part are provided in an exterior part. The electric work machine comprises: in an inner part of the body, a battery unit for charging power; an electric motor which is driven by the power supplied from the battery unit; a hydraulic pump which is driven by the electric motor to eject hydraulic oil; a heat exchanger for cooling the hydraulic oil; and a fan which sucks air from the first opening part into the inner part of the body and evacuates the air from the second opening part to an outer part of the body. The first opening part provided in the exterior part is located in a lower position than the electric motor.

## Description

### TECHNICAL FIELD

The present invention relates to an electric work machine.

### BACKGROUND ART

For example, in an electric hydraulic excavator disclosed in Patent Document 1, a fan is provided to cool (air cool) an electric motor, a hydraulic pump and an oil cooler by cooling air. Further, a cooling water pump is provided to cool (water cool) the electric motor by cooling water.

### PRIOR ART DOCUMENT

### PATENT DOCUMENT

Patent Document 1: WO2011/102042A1

### SUMMARY OF INVENTION

### TECHNICAL PROBLEM

However, in a compact electric work machine whose spaces to arrange devices including an electric motor, a hydraulic pump and an oil cooler are limited, when a cooling water pump is provided to water cool the electric motor as in Patent Document 1, spaces to arrange a battery unit for supplying power to the electric motor is narrowed, which makes the installation of a large (large-capacity) battery unit difficult. In addition, since the electric motor is a source of driving the hydraulic excavator and heat is readily generated, it needs to be cooled preferentially over other devices.

The present invention has been made to solve the above problem, and its object is to provide an electric work machine in which while an electric motor is preferentially cooled, other devices arranged in the inner part of a body can also be cooled, and the installation of a large battery unit is allowed so that the capacity battery can be increased.

### SOLUTION TO PROBLEM

An electric work machine according to one aspect of the present invention has a body in which a first opening part and a second opening part are provided in an exterior part, and comprises: in an inner part of the body, a battery unit for charging power; an electric motor which is driven by the power supplied from the battery unit; a hydraulic pump which is driven by the electric motor to eject hydraulic oil; a heat exchanger for cooling the hydraulic oil; and a fan which sucks air from the first opening part into the inner part of the body and evacuates the air from the second opening part to an outer part of the body, wherein the first opening part provided in the exterior part is located in a lower position than the electric motor.

### ADVANTAGEOUS EFFECTS OF INVENTION

According to the above-described structure, while the electric motor is preferentially cooled, other devices arranged in the inner part of the body can also be cooled, and the installation of a large battery unit is allowed so that the battery capacity can be increased.

### BRIEF DESCRIPTION OF DRAWINGS

FIG. 1 is a left side view of a schematic structure of a hydraulic excavator as an example of an electric work machine according to an embodiment of the present invention.
FIG. 2 is a bottom view of an upper structure in the hydraulic excavator.
FIG. 3 is a block diagram schematically illustrating a structure of an electrical system and a hydraulic system of the hydraulic excavator.
FIG. 4 is a perspective view from the front left illustrating the internal structure of an engine room in the upper structure.
FIG. 5 is a perspective view from the rear left illustrating the internal structure of the engine room.
FIG. 6 is a front view illustrating the arrangement of devices in the engine room.
FIG. 7 is a left side view illustrating the arrangement of the devices.
FIG. 8 is a perspective view from the front left illustrating the structure of a duct part provided in the engine room.

### DESCRIPTION OF EMBODIMENTS

An embodiment of the present invention will be described below based on the drawings.

### [1. Schematic structure of an electric work machine]

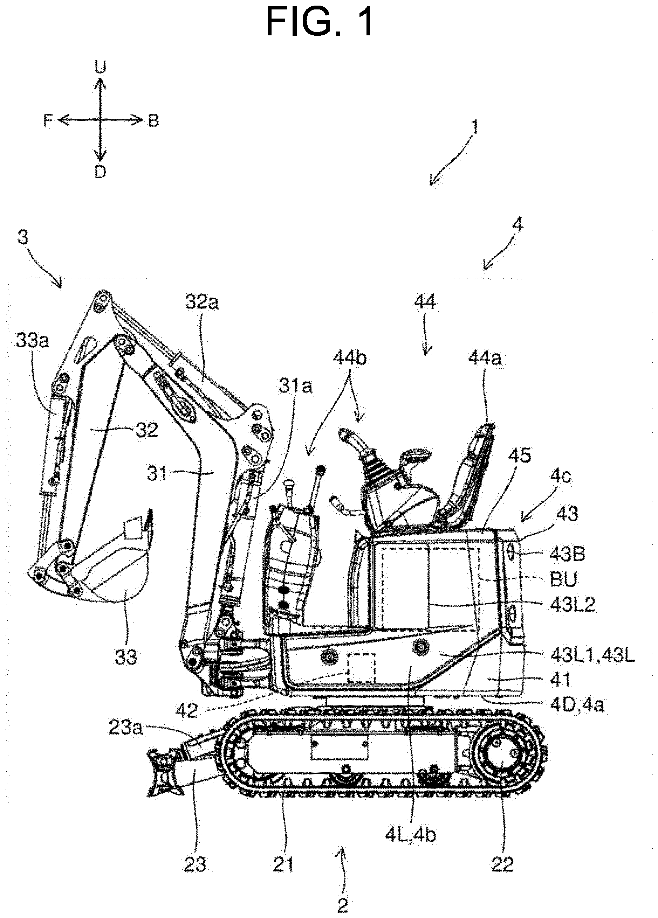

FIG. 1 is a left side view of a schematic structure of a hydraulic excavator 1 (an electric excavator) as an example of an electric work machine according to an embodiment of the present invention. The hydraulic excavator 1 comprises an undercarriage 2, a work machine 3, and an upper structure 4 (also referred to as a body).

Here, directions are defined as follows. A direction where an operator (manipulator, driver) seated on a driver seat 44a arranged in an operation part 44 of the upper structure 4 faces forward is defined as the "front", and the opposite direction is defined as the "back". In a state where the upper structure 4 is not revolved with respect to the undercarriage 2 (a revolving angle of 0°), the front-back direction of the upper structure 4 coincides with the front-back direction of the undercarriage 2. In the drawings, the hydraulic excavator 1 is illustrated in a state where the upper structure 4 is not revolved with respect to the undercarriage 2. In addition, the left side viewed from the operator seated on the driver seat 44a is defined as the "left" and the right side is defined as the "right". Furthermore, the gravity direction perpendicular to the front-back direction and the left-right direction (also referred to as the width direction) is defined as the up-down direction, the upstream side in the gravity direction is defined as the "up", and the downstream side is defined as the "down". In the drawings, the front is indicated by a symbol "F", the rear is indicated by a symbol "B", the left is indicated by a symbol "L", the right is indicated by a symbol "R", the up is indicated by a symbol "U", and the down is indicated by a symbol "D", as necessary.

The undercarriage 2 comprises a pair of left and right crawlers 21, a pair of left and right travel motors 22 and a blade 23. When the left and right travel motors 22 respectively drive the left and right crawlers 21, the hydraulic excavator 1 can be moved forward and backward. The travel motors 22 are composed of hydraulic motors. The blade 23 for performing ground leveling work is provided forward of the undercarriage 2. The blade 23 is rotated by a blade cylinder 23a. The blade cylinder 23a is composed of a hydraulic cylinder.

The work machine 3 comprises a boom 31, an arm 32, and a bucket 33. When the boom 31, the arm 32, and the bucket 33 are independently driven, excavation work of soil, sand, etc., can be carried out.

The boom 31 is rotated by a boom cylinder 31a. The base end of the boom cylinder 31a is supported by the front part of the upper structure 4 so as to be movable in a freely extended and contracted manner. In the drawings, the boom cylinder 31a is arranged so that its rod side is defined as the base end; however, the boom cylinder 31a may be arranged so that its tube side is defined as the base end. The arm 32 is rotated by an arm cylinder 32a.

The base end of the arm cylinder 32a is supported by the boom 31 to be movable in a freely extended and contracted manner. The bucket 33 is rotated by a bucket cylinder 33a. The base end of the bucket cylinder 33a is supported by the arm 32 to be movable in a freely extended and contracted manner. The boom cylinder 31a, the arm cylinder 32a, and the bucket cylinder 33a are respectively composed of hydraulic cylinders.

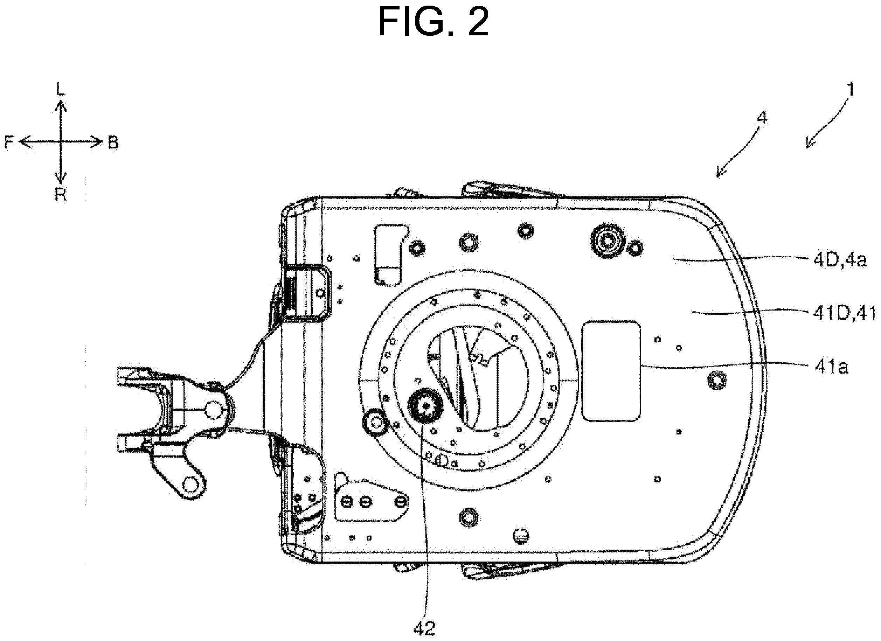

The structure of the upper structure 4 will be explained with reference to FIG. 2. FIG. 2 is a bottom view of the upper structure 4. The upper structure 4 is located above the undercarriage 2 and is provided revolvably with respect to the undercarriage 2 via a revolving bearing (not shown). The upper structure 4 comprises a body frame 41 (also referred to as a revolving frame), a revolving motor 42, an engine room 43 and an operation part 44. The upper structure 4 is revolved with respect to the undercarriage 2 by driving the revolving motor 42 arranged in the body frame 41. The revolving motor 42 is composed of a hydraulic motor.

The body frame 41 is provided below the upper structure 4. The body frame 41 is composed of a cast member which extends horizontally; however it is not limited thereto, and it may be a structure including a plurality of metal members bonded by welding and the like, for example. An undersurface 41D (see FIG. 2) of the body frame 41 is included in a bottom surface part 4D of the upper structure 4. In the upper structure 4, a portion including the bottom surface part 4D is referred to as a bottom part 4a of the upper structure 4. Therefore, the body frame 41 is located in the bottom part 4a of the upper structure 4.

In the body frame 41, a first opening part 41a (see FIG. 2) penetrating in the up-down direction is provided. The first opening part 41a is formed in a rectangular shape when the upper structure 4 is viewed from below; however, its shape is not limited thereto, and it may be a square, a circle, an oval or a polygon other than a rectangle, for example. In addition, the first opening part 41a may be a structure in which a plurality of them are provided.

In the engine room 43, a rear hood member 43B, a left hood member 43L, a right hood member (not shown) and an upper wall part 45 are provided. The rear hood member 43B constitutes a side wall of the rear side in the engine room 43. The rear hood member 43B is composed of a metallic plate-like member.

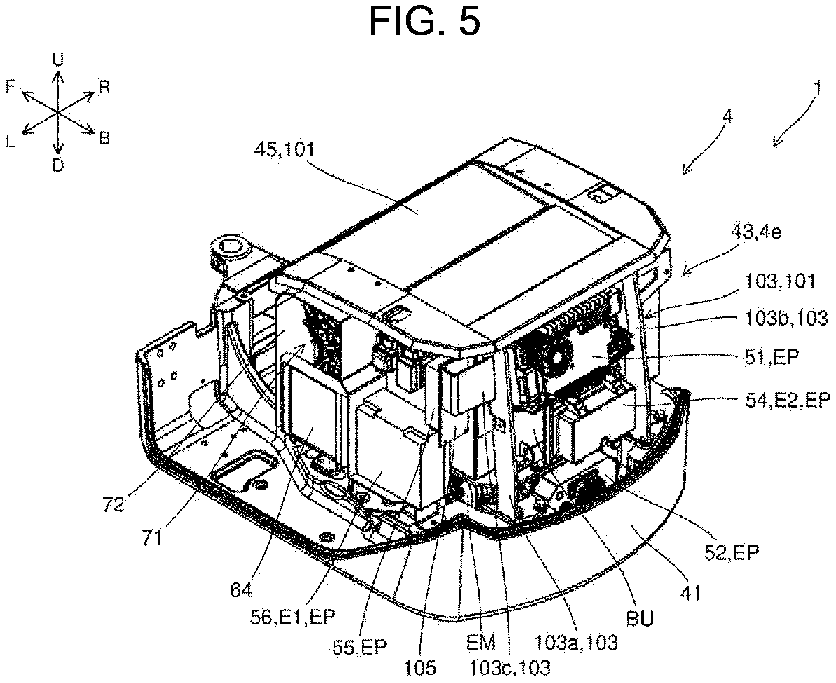

The left hood member 43L and the right hood member described above constitute left and right side walls of the engine room 43. The left hood member 43L is fixed to the body frame 41 and a rear hood support part 103 (see FIG. 5) which is described later. The right hood member is also fixed to the body frame 41 and the rear hood support part 103. The left hood member 43L and the right hood member are fixed to the body frame 41 via a support member (not shown). The left hood member 43L and the right hood member are composed of metallic plate-like members.

An outer surface 43L1 of the left hood member 43L is included in a left surface part 4L of the upper structure 4.

In the upper structure 4, a portion including a side surface part (the left surface part 4L, for example) is referred to as a side part 4b of the upper structure 4. Therefore, the left hood member 43L is located in the side part 4b of the upper structure 4.

In the left hood member 43L, a second opening part 43L2 penetrating in the up-down direction is provided.

The second opening part 43L2 is formed in a rectangular shape when the upper structure 4 is viewed from the left; however, its shape is not limited thereto, and it may be a square, a circle, an oval or a polygon other than a rectangle. In addition, the second opening part 43L2 may be a structure in which a plurality of them are provided.

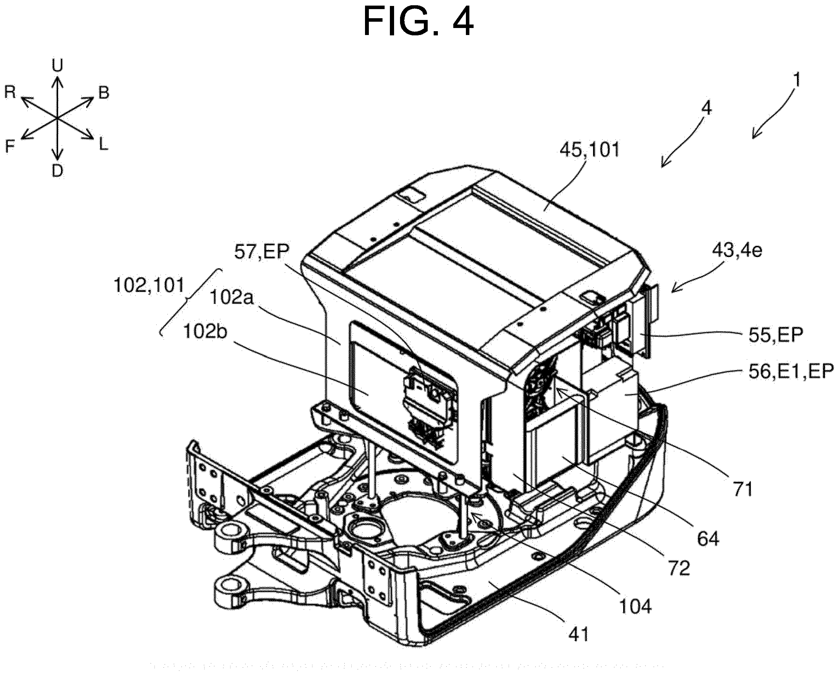

The upper wall part 45 constitutes an upper side wall of the engine room 43. The upper wall part 45 is composed of a metallic plate-like member. The upper wall part 45 is coupled to a front hood support part 102 (see FIG. 4) described later and the rear hood support part 103 (see FIG. 5).

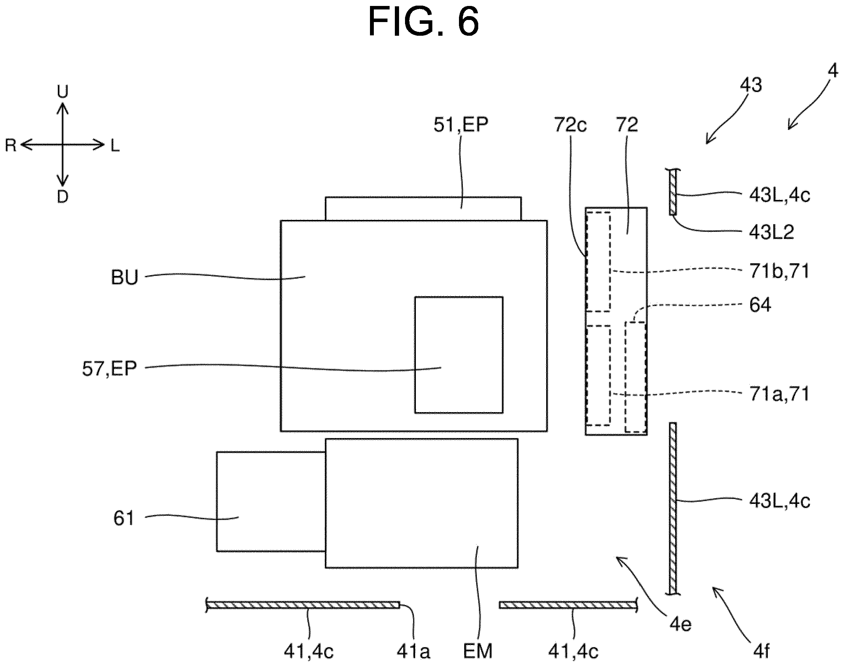

The rear hood member 43B, the left hood member 43L, the right hood member and the upper wall part 45 constitute an exterior part 4c of the upper structure 4. The body frame 41 is also included in the exterior part 4c. The outer peripheral surface of the upper structure 4 is constituted by the exterior part 4c. In the upper structure 4, an inner portion partitioned by the exterior part 4c is referred to as an inner part 4e (see FIG. 4) of the upper structure 4. In the inner part 4e of the upper structure 4, spaces inside the engine room 43 are included. With respect to the exterior part 4c, a side opposite to the inner part 4e of the upper structure 4 (in other words, an outer portion partitioned by the exterior part 4c) is referred to as an outer part 4f (see FIG. 6) of the upper structure 4.

Because the exterior part 4c is structured with the body frame 41 and the left hood member 43L, the first opening part 41a of the body frame 41 and the second opening part 43L2 of the left hood member 43L are also included in the exterior part 4c. In a word, in the exterior part 4c, the first opening part 41a and the second opening part 43L2 are provided.

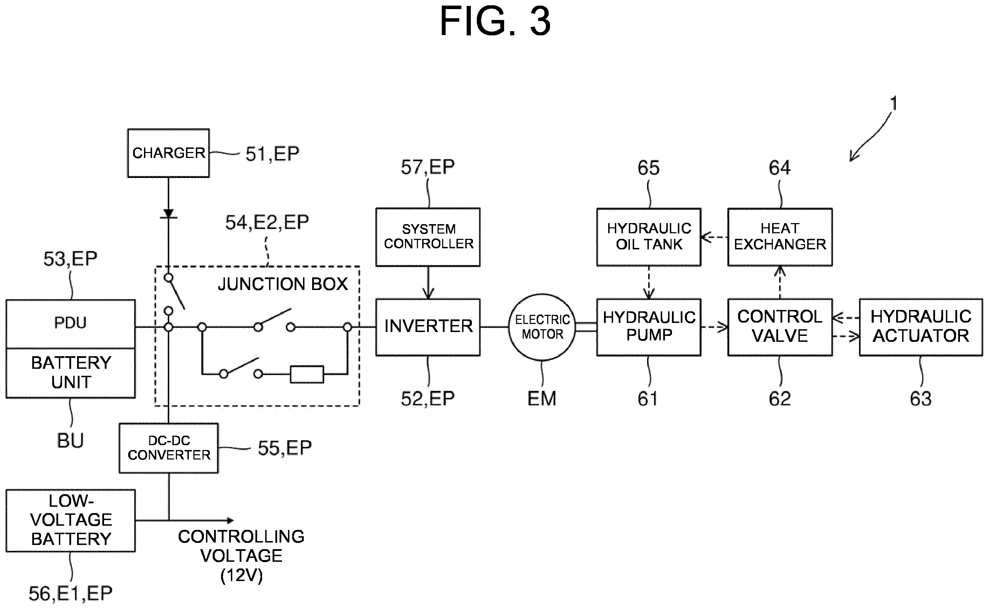

In the engine room 43, a battery unit BU (also referred to as a high-voltage battery) and a hydraulic pump 61 (see FIG. 3) are contained. Namely, the hydraulic excavator 1 has the battery unit BU and the hydraulic pump 61 in the inner part 4e of the upper structure 4. The battery unit BU is composed of a lithium-ion battery, for example, and stores power for driving an electric motor EM (see FIG. 3). The battery unit BU may be composed of a plurality of batteries as a unit, or may be composed of a single battery cell. Further, a feeding port (not illustrated) is provided in the upper structure 4. By connecting the feeding port to an external power supply (not shown), the battery unit BU can be charged.

The hydraulic pump 61 is driven by the electric motor EM to eject hydraulic oil. The hydraulic oil (pressure oil) is supplied to hydraulic motors (for example, the left and right travel motors 22, the revolving motor 42), and hydraulic cylinders (for example, the blade cylinder 23a, the boom cylinder 31a, the arm cylinder 32a, the bucket cylinder 33a). The hydraulic motors and the hydraulic cylinders which are driven by hydraulic oil being supplied from the hydraulic pump 61 are collectively called a hydraulic actuator 63 (see FIG. 3).

The operation part 44 is provided above the upper structure 4. The driver seat 44a is arranged in the operation part 44. The driver seat 44a is fixed to the top surface part of the upper wall part 45. A plurality of operation members 44b are arranged around the driver seat 44a. The plurality of operation members 44b are structured with levers, switches, pedals and the like. When the operator is seated on the driver seat 44a and operates the plurality of operation members 44b, the hydraulic actuators 63 is driven. This allows traveling the undercarriage 2, ground leveling work by the blade 23, excavation work by the work machine 3, revolving the upper structure 4 and the like to be performed.

The hydraulic excavator 1 may have a structure that the hydraulic actuator 63 and an electric actuator driven by electric power are concurrently used as actuators. The electric actuator includes an electric travel motor, an electric revolving motor and an electric cylinder, for example.

### [2. Structure of an electric system and a hydraulic system]

FIG. 3 is a block diagram schematically illustrating the structure of an electric system and a hydraulic system of the hydraulic excavator 1. Meanwhile, in FIG. 3, wiring through which an electric signal or current flows is indicated by a solid line, and an oil passage through which hydraulic oil flows is indicated by a dashed line.

The hydraulic excavator 1 comprises the electric motor EM, a charger 51, an inverter 52, a PDU (a power drive unit) 53, a junction box 54, a DC-DC converter 55, a low-voltage battery 56 and a system controller 57. The charger 51, the inverter 52, the PDU 53, the junction box 54, the DC-DC converter 55, the low-voltage battery 56 and the system controller 57 are collectively called electrical parts EP. The electrical parts EP are contained in the engine room 43 (see FIG. 4 to FIG. 7). Namely, the hydraulic excavator 1 has the electrical parts EP in the inner part 4e of the upper structure 4.

Respective devices included in the electrical parts EP are directly connected to the battery unit BU or electrically connected to the battery unit BU via other devices included in the electrical parts EP. For example, the PDU 53 included in the electrical parts EP is directly connected to the battery unit BU. Furthermore, the inverter 52 included in the electrical parts EP is electrically connected to the battery unit BU via the junction box 54 as another device included in the electrical parts EP.

The electric motor EM is driven by electric power supplied from the battery unit BU via the junction box 54 and the inverter 52. The electric motor EM is composed of a synchronous motor, an induction motor or the like. The electric motor EM is contained in the engine room 43 (see FIG. 5 to FIG. 7). That is to say, the hydraulic excavator 1 has the electric motor EM in the inner part 4e of the upper structure 4.

The charger 51 (also referred to as a feeder) converts an AC voltage supplied from the external power supply into a DC voltage. The inverter 52 converts a DC voltage supplied from the battery unit BU into an AC voltage and supplies the AC voltage to the electric motor EM. Thus, the electric motor EM is driven. A supply of the AC voltage from the inverter 52 to the electric motor EM is performed based on a drive command which is outputted from the system controller 57.

The PDU 53 is a battery control unit that controls an internal battery relay to control input and output of the battery unit BU. The junction box 54 is structured with a charger relay, an inverter relay, a fuse and the like. A voltage outputted from the charger 51 is supplied to the battery unit BU via the junction box 54 and the PDU 53. Furthermore, a voltage outputted from the battery unit BU is supplied to the inverter 52 via the PDU 53 and the junction box 54.

The DC-DC converter 55 (also simply referred to as a converter) downconverts a high DC voltage (e.g., 48 V) supplied from the battery unit BU via the junction box 54 to a low voltage (e.g., 12 V). In other words, the DC-DC converter 55 is electrically connected to the battery unit BU. The low-voltage battery 56 is composed of a lead battery, for example. The low-voltage battery 56 is connected to the DC-DC converter 55 and stores electric power which is downconverted and outputted by the DC-DC converter 55. Therefore, the low-voltage battery 56 outputs a voltage lower than that of the battery unit BU.

Low DC voltages outputted from the DC-DC converter 55 and the low-voltage battery 56 are supplied to the system controller 57, a drive part of a fan 71 described later (see FIG. 4) and the like. The system controller 57 is composed of an electronic control unit also referred to as an ECU (an Electric Control Unit). The system controller 57 performs electric control over respective parts of the hydraulic excavator 1.

The plurality of hydraulic pumps 61 are connected to a rotation shaft (an output shaft) of the electric motor EM. The plurality of hydraulic pumps 61 include a variable displacement pump and a fixed displacement pump. In FIG. 3, only one hydraulic pump 61 is illustrated as an example. Each of the hydraulic pumps 61 is connected to a hydraulic oil tank 65 that stores hydraulic oil. When the hydraulic pumps 61 are driven by the electric motor EM, hydraulic oil in the hydraulic oil tank 65 is supplied to the hydraulic actuator 63 via a control valve 62. Thus, the hydraulic actuator 63 is driven. The control valve 62 is a direction-switching valve that controls the flow direction and the flow rate of hydraulic oil supplied to the hydraulic actuator 63.

In the oil passage to which the control valve 62 and the hydraulic oil tank 65 are connected, a heat exchanger 64 (also referred to as an oil cooler) is provided. Hydraulic oil which has heat generated with the hydraulic actuator 63 being driven flows into the heat exchanger 64 via the control valve 62. The heat exchanger 64 exchanges heat with air (wind) hitting against the heat exchanger 64 to cool hydraulic oil. In a word, the heat exchanger 64 cools hydraulic oil which is ejected from the hydraulic pumps 61 and has heat generated due to the hydraulic actuator 63 being driven.

### [3. Internal structure of the engine room]

FIG. 4 and FIG. 5 are a perspective view from the front left and a perspective view from the rear left illustrating the internal structure of the engine room 43. The engine room 43 has a hood support part 101. The hood support part 101 supports the rear hood member 43B (see FIG. 1), the left hood member 43L (see FIG. 1) and the right hood member described above. The hood support part 101 is structured with an upper wall part 45, a front hood support part 102 and a rear hood support part 103.

As shown in FIG. 4, the front hood support part 102 is arranged forward of the engine room 43.

The front hood support part 102 has a vertical plate 102a and an attachment plate 102b. The vertical plate 102a is composed of a metallic plate-like member which extends in the up-down direction, whose upper end part is bent obliquely rearward, and whose lower end part is bent forward. The upper end part of the vertical plate 102a is bonded to the front end part of the upper wall part 45 by welding. The lower end part of the vertical plate 102a is coupled to a support column part 104 by fastening members such as bolts.

The lower end part of the support column part 104 is coupled to the body frame 41. By means of the support column part 104, the front hood support part 102 is supported by the body frame 41.

The attachment plate 102b is composed of a metallic plate-like member which extends in the left-right direction and whose respective left and right end parts are bent forward. Respective bent end parts are coupled to the rear surface part of the vertical plate 102a. In the attachment plate 102b, a plurality of attachment holes penetrating in the front-back direction are provided (not shown). The system controller 57 is fixed to the attachment holes by fastening members such as bolts. Meanwhile, in the vertical plate 102a, a through-hole penetrating in the front-back direction (not shown) is provided in a position corresponding to the system controller 57.

As shown in FIG. 5, the rear hood support part 103 is arranged rearward of the engine room 43.

The rear hood support part 103 has a left plate part 103a, a right plate part 103b and a stay 103c. The left plate part 103a and the right plate part 103b are respectively composed of metallic plate-like members extending in the up-down direction. The left plate part 103a and the right plate part 103b are coupled to an upper plate part (not shown) whose respective upper end parts extend in the left-right direction. The upper plate part is bonded to the upper wall part 45 by welding. Respective lower end parts of the left plate part 103a and the right plate part 103b are coupled to the body frame 41.

In the left surface part of the left plate part 103a, the stay 103c is provided. The stay 103c is composed of a metallic plate-like member which extends in the left-right direction and whose left end part is bent forward. The DC-DC converter 55 is located forward of the stay 103c. A support bracket 105 is attached to the rear surface part of the DC-DC converter 55. The support bracket 105 is composed of a metallic plate-like member extending in the up-down direction and is coupled to the stay 103c. Therefore, the rear surface part of the DC-DC converter 55 is fixed to the stay 103c via the support bracket 105. That is to say, the DC-DC converter 55 is supported from rear.

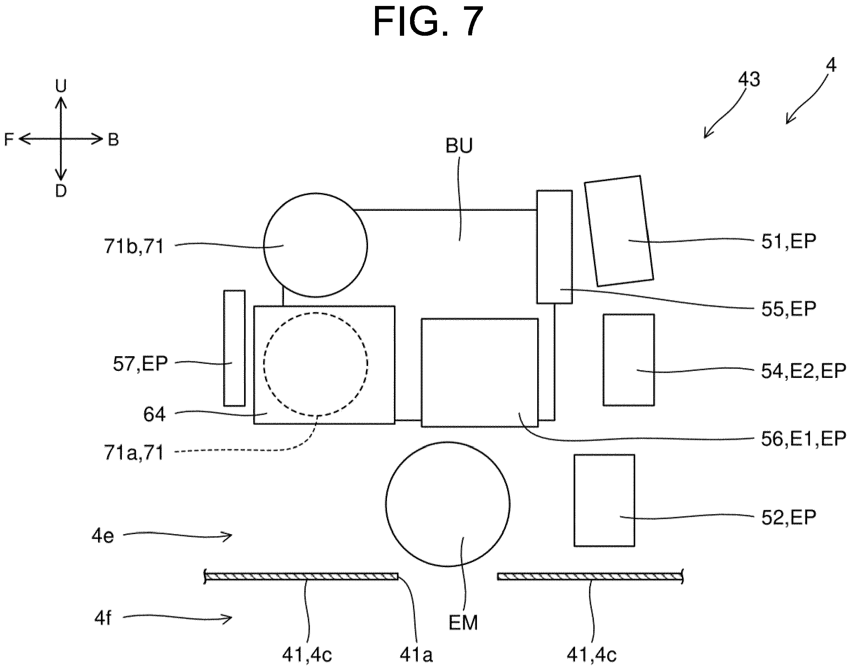

Next, in the internal structure of the engine room 43, the arrangement of devices (e.g., the battery unit BU, the electric motor EM, the electrical parts EP and the like) will be specifically explained based on FIG. 6 and FIG. 7. FIG. 6 and FIG. 7 are a front view and a left side view illustrating the arrangement of devices in the engine room 43. Although respective devices arranged in the engine room 43 are supported on the body frame 41 via support members such as stays (see FIG. 4 and FIG. 5), illustrations of such support members are omitted for the purpose of clarifying positions to arrange respective devices in FIG. 6 and FIG. 7. In addition, in FIG. 7, an illustration of a duct part 72 shown in FIG. 6 and described later is omitted for the sake of convenience. In FIG. 6 and FIG. 7, for the sake of clarifying the position to arrange the electric motor EM with respect to the first opening part 41a, the body frame 41 is shown which is cut at the position of the first opening part 41a in the up-down direction (FIG. 6) and in the front-back direction (FIG. 7). Similarly, in FIG. 6, for the sake of clarifying the positions to arrange the heat exchanger 64 and the fan 71 with respect to the second opening part 43L2, the left hood member 43L is shown which is cut at the position of the second opening part 43L2 in the up-down direction.

As shown in FIG. 6, the first opening part 41a provided in the body frame 41 is located on the lower side of the engine room 43. The electric motor EM is arranged on the inner side (i.e., the upper side) of the engine room 43 with respect to the first opening part 41a, and in a position opposite to the first opening part 41a. Namely, the first opening part 41a is located in the lower position than the electric motor EM and is provided opposite to the electric motor EM. The hydraulic pump 61 is arranged on the right side of the electric motor EM.

The second opening part 43L2 which is provided in the left hood member 43L is located on the left side of the engine room 43. The heat exchanger 64 and the fan 71 (a first fan 71a and a second fan 71b described later) are arranged on the inner side (i.e., on the right) of the engine room 43 with respect to the second opening part 43L2, and in a position opposite to the second opening part 43L2. That is to say, the hydraulic excavator 1 has the heat exchanger 64 and the fan 71 in the inner part 4e of the upper structure 4. Moreover, the heat exchanger 64 and the fan 71 are arranged opposite to the second opening part 43L2. The fan 71 is located in the further right position than the heat exchanger 64.

The fan 71 is composed of an electric fan and is driven by low voltage power which is supplied from the DC-DC converter 55 and the low-voltage battery 56. When the fan 71 is driven, air (outside air) is sucked (taken) into the engine room 43. This creates an air (wind) flow in the engine room 43.

The fan 71 includes the first fan 71a and the second fan 71b which are arranged one on top of the other in the up-down direction (see also FIG. 7). The first fan 71a is arranged below the second fan 71b and opposite to the heat exchanger 64. Therefore, in order from the left, the left hood member 43L having the second opening part 43L2, the heat exchanger 64 and the first fan 71a are arranged side by side. In a word, the heat exchanger 64 is located between the first fan 71a and the second opening part 43L2.

The second fan 71b is located in the upper position than the heat exchanger 64. By so doing, the second fan 71b is arranged so that arranging the heat exchanger 64 on the left side of the second fan 71b is avoided. Thus, the second fan 71b is directly opposed to the second opening part 43L2.

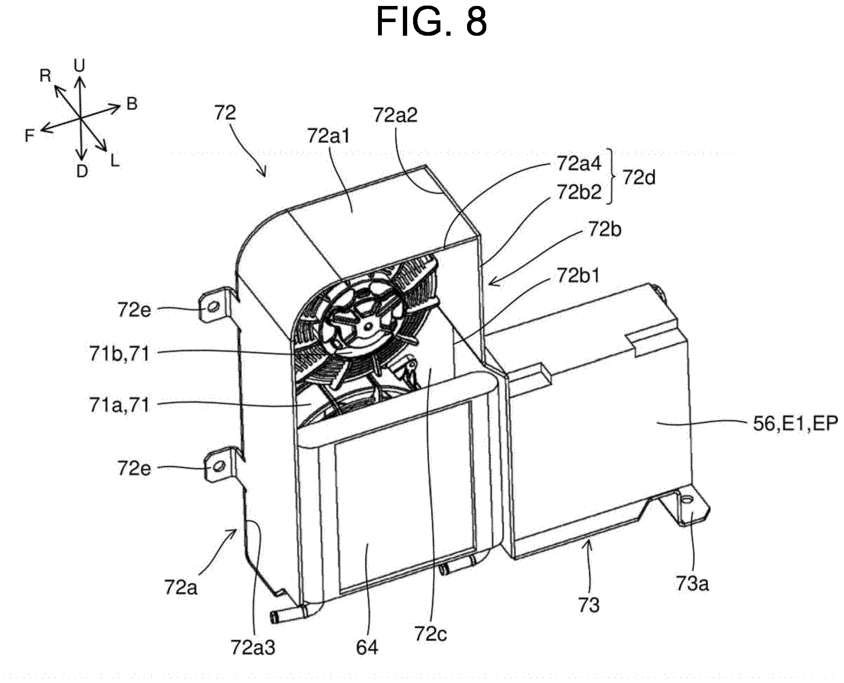

The battery unit BU is arranged on the further right side than the first fan 71a and the second fan 71b. Also, the duct part 72 is provided between the battery unit BU and the second opening part 43L2. The heat exchanger 64, the first fan 71a and the second fan 71b are arranged in the duct part 72 (see also FIG. 8). Meanwhile, the structure of the duct part 72 is described later.

The electric motor EM is located below the battery unit BU and in a position where the electric motor EM and the battery unit BU are arranged one on top of the other in the up-down direction. In short, the battery unit BU is arranged opposite to the electric motor EM. Further, the system controller 57 is arranged forward of the battery unit BU. As described above, the system controller 57 is fixed to the front hood support part 102.

As shown in FIG. 7, a first electrical device E1 is arranged on the further left side than the battery unit BU (on one side in the width direction) and in a position where the first electrical device E1 faces the battery unit BU. Namely, the first electrical device E1 is arranged opposite to the battery unit BU. The first electrical device E1 includes the low-voltage battery 56. Consequently, the first electrical device E1 is electrically connected to the battery unit BU (see FIG. 3).

The DC-DC converter 55 is arranged on the further left side than the battery unit BU and on the upper side than the first electrical device E1. In other words, the DC-DC converter 55 is located on one side in the up-down direction with respect to the first electrical device E1 (the low-voltage battery 56).

The charger 51 is arranged in the further rear position than the battery unit BU. A second electrical device E2 is arranged below the charger 51 and in a position where the second electrical device E2 faces the battery unit BU. Namely, the second electrical device E2 is arranged opposite to the battery unit BU. The second electrical device E2 includes the junction box 54. Consequently, the second electrical device E2 is electrically connected to the inverter 52 (see FIG. 3).

The inverter 52 is arranged below the second electrical device E2 and in a position where the inverter 2 faces the electric motor EM. Namely, the second electrical device E2 is arranged above the inverter 52, and the inverter 52 is arranged opposite to the electric motor EM.

In the above structure, when the fan 71 (the first fan 71a and the second fan 71b) is (are) driven, air is sucked from the first opening part 41a into the inner part 4e of the body (especially, into the engine room 43). Sucked air goes up and flows through the inner part 4e of the body and is evacuated from the second opening part 43L2 to the outer part 4f of the body.

In other words, in this structure, when the fans 71 is driven, air sucked from the first opening part 41a can be gone up to apply it to the electric motor EM in preference to other devices (the battery unit BU, the hydraulic pump 61, the heat exchanger 64). Moreover, air (wind) flowing through the inner part 4e of the body from the first opening part 41a to the second opening part 43L2 can also be applied to other devices. Thus, while the electric motor EM is cooled (air cooled) preferentially, other devices arranged in the inner part 4e of the body can also be cooled (air cooled).

The ability to air cool the electric motor EM and other devices eliminates the necessity of a member required when these are water cooled (a cooling water pump, for example). Because of this, when the size of the body is unchanged, spaces to arrange the battery unit BU can be expanded by the spaces to arrange the above member. Therefore, the installation of the large battery unit BU is allowed so that the battery capacity can be increased. The above makes it possible to cool the electric motor EM preferentially while other devices arranged in the inner part 4e of the body can also be cooled, and to install the large battery unit BU so that the battery capacity can be increased.

From the viewpoint of air sucked from the first opening part 41a being applied to the electric motor EM first to preferentially cool the electric motor EM, it is desired that the first opening part 41a is provided opposite to the electric motor EM, as shown in FIG. 6.

From the viewpoint of air for cooling the electric motor EM being similarly and efficiently applied to the battery unit BU to efficiently cool the battery unit BU, it is desired that the battery unit BU is arranged opposite to the electric motor EM, as shown in FIG. 6.

When the electric motor EM is arranged closer to the first opening part 41a than the battery unit BU, air sucked from the first opening part 41a is applied to the electric motor EM in preference to the battery unit BU. Thus, from the viewpoint of the electric motor EM being cooled in preference to the battery unit BU, it is desired that the electric motor EM is arranged below the battery unit BU, as illustrated in FIG. 6.

From the viewpoint of reliably realizing the structure in which the first opening part 41a provided in the exterior part 4c is located in the lower position than the electric motor EM, the following structure is desired. Namely, such a structure is desired that the exterior part 4c includes the body frame 41 located in the bottom part 4a of the body and the first opening part 41a is provided in the body frame 41.

In the inner part 4e of the body, when a range within which air flows is expanded in the up-down direction, a layout where devices which need to be cooled (the electric motor EM, the battery unit BU, for example) are arranged one on top of the other in the up-down direction is allowed, which improves degrees of freedom in the layout for arranging devices. From this viewpoint, as shown in FIG. 6 and FIG. 7, in the structure where the fan 71 includes the first fan 71a and the second fan 71b, it is desired that the first fan 71a and the second fan 71b are arranged one on top of the other in the up-down direction.

When air just before being evacuated from the second opening part 43L2 is applied to the heat exchanger 64 to cool it, air (relatively hot air) after cooling the relatively hot heat exchanger 64 is directly evacuated from the second opening part 43L2 to the outer part 4f of the body. By so doing, such a matter is avoided that relatively hot air flows through the inner part 4e of the body to reduce the efficiency of cooling devices arranged in the inner part 4e of the body. Therefore, as shown in FIG. 6, it is desired that the heat exchanger 64 is arranged between the first fan 71a and the second opening part 43L2.

Air going up and flowing through the inner part 4e of the body reaches high temperatures as air cools devices. That is to say, in the inner part 4e of the body, the temperature of air on the upper side is higher than that of air on the lower side (in other words, the temperature of air on the upstream side is higher than that of air on the downstream side). Accordingly, from the viewpoint of air having relatively low temperatures being applied to the heat exchanger 64 to efficiently cool the heat exchanger 64, it is desired that the first fan 71a which mainly feeds air to the heat exchanger 64 is arranged below the second fan 71b, as shown in FIG. 6.

For example, it is desired that air is reliably evacuated from the second opening part 43L2 by the second fan 71b even if the evacuation of air by the first fan 71a is weaken, for example, due to the arrangement of the heat exchanger 64. From this viewpoint, as shown in FIG. 6, it is desired that the second fan 71b is arranged directly opposite to the second opening part 43L2.

When air flowing through the inner part 4e of the body smoothly flows from the first opening part 41a toward the second opening part 43L2, devices arranged in the inner part 4e of the body are efficiently cooled. Thus, from the viewpoint of smoothly flowing air, the following structure is desired. Namely, as shown in FIG. 1, in such a structure that the exterior part 4c includes the hood member located in the side part 4b of the body (the left hood member 43L in this embodiment), it is desired that the second opening part 43L2 is provided in the hood member.

A device (the DC-DC converter 55, for example) which outputs a voltage (12 V, for example) lower than the voltage (48 V, for example) which is outputted from the battery unit BU and a device into which the above-mentioned low voltage is inputted (the low-voltage battery 56, for example) are collectively referred to as a low-voltage device (not shown).

When the above low-voltage devices are arranged together (at one place), in maintenance operations of low-voltage devices, for example, such operations are allowed by accessing only one place and the work time is shortened. Furthermore, if the low-voltage devices can be arranged together in empty spaces within the body in the up-down direction, the above empty spaces can also be utilized effectively. In this regard, as shown in FIG. 7, in the structure that has the DC-DC converter 55 and the first electrical device E1 including the low-voltage battery 56 in the inner part 4e of the body, it is desired that the DC-DC converter 55 is arranged on one side in the up-down direction (on the upper side in this embodiment) with respect to the low-voltage battery 56 (the first electrical device E1).

From the viewpoint of the empty spaces in the left-right direction (the width direction) of the battery unit BU being utilized effectively as spaces to arrange the DC-DC converter 55, it is desired that the DC-DC converter 55 is arranged on one side in the width direction of the body (on the left in this embodiment) with respect to the battery unit BU, as shown in FIG. 7. In addition, from the viewpoint of the empty spaces of the DC-DC converter 55 in the rear of the body being utilized effectively, it is desired that the DC-DC converter 55 is supported from the rear of the body, as shown in FIG. 5.

If devices (high-voltage devices) into which and from which power stored in the battery unit BU is inputted and outputted can be arranged together, the high voltage devices can be connected in a simplified structure and the body can be assembled efficiently (in a short time), which is desired in this regard. For example, it is desired that the battery unit BU, the electric motor EM, the inverter 52 and the second electrical device E2 (the junction box 54 in this embodiment) which constitute high-voltage devices are arranged together in the inner part 4e of the body. In particular, as shown in FIG. 7, it is desired that the inverter 52 is arranged opposite to the electric motor EM, and the second electrical device E2 is arranged upward of the inverter 52 and opposite to the battery unit BU.

Here, the structure of the duct part 72 will be explained based on FIG. 8. FIG. 8 is a perspective view from front left illustrating the structure of the duct part 72. The duct part 72 has a front wall part 72a, a rear wall part 72b and a right wall part 72c.

The front wall part 72a is structured with a metallic plate-like member which extends in the up-down direction and whose upper part 72a1 is curved rearward. A rear end part 72a2 of the curved upper part 72a1 (an upper end part before being curved) is coupled to the rear wall part 72b.

The rear wall part 72b is structured by bending it so that its lower part is located with respect to its upper part in a rearward displaced manner. The lower end part of the rear wall part 72b is coupled to a support base part 73. On the support base part 73, the first electrical device E1 including the low-voltage battery 56 is arranged one on top of the other in the rear of the duct part 72. Namely, the first electrical device E1 is arranged opposite to the duct part 72.

The right wall part 72c is structured so that it extends in the front-back direction and in the up-down direction, and is coupled to the right end part 72a3 of the front wall part 72a and the right end part 72b 1 of the rear wall part 72b. Because of this, the right wall part 72c is located on the right of the duct part 72. Therefore, the right wall part 72c is arranged opposite to the left surface of the battery unit BU (see FIG. 6). In the right wall part 72c, there is provided a plurality of inlet parts (not shown) which open in a circular shape when the right wall part 72c (the duct part 72) is viewed from the right.

The shape of the inlet parts is not limited to a circle, and may be an oval, a rectangle or a polygon other than the rectangle, for example.

The first fan 71a and the second fan 71b are attached on the left of the right wall part 72c and in a position corresponding to the inlet parts. By so doing, the first fan 71a and the second fan 71b are arranged (via the inlet parts) in a position facing the left surface of the battery unit BU (see FIG. 6). In other words, the first fan 71a and the second fan 71b are arranged opposite to the left surface of the battery unit BU.

The heat exchanger 64 is arranged between the lower part of the front wall part 72a and the lower part of the rear wall part 72b in the front-back direction. The heat exchanger 64 is located on the further left than the fan 71 (on the left of the first fan 71a, in particular). In the duct part 72, an outlet part 72d is provided on the opposite side to the inlet parts (i.e., on the left of the duct part 72) with respect to the heat exchanger 64 and the fan 71 (the first fan 71a and the second fan 71b). The outlet part 72d is structured with the left end part 72a4 of the front wall part 72a and the left end part 72b2 of the rear wall part 72b.

A plurality of first fixing parts 72e are provided on the front right of the duct part 72. The first fixing parts 72e are fixed to the front hood support part 102 (see FIG. 4) by fastening members such as bolts. In addition, a second fixing part 73a is provided on the rear side of the support base part 73. The second fixing part 73a is fixed to the body frame 41 (see FIG. 5) by fastening members such as bolts.

As shown in FIG. 6, when the fan 71 (the first fan 71a, the second fan 71b) is driven, after air goes up through the inner part 4e of the body and hits against the electric motor EM, it flows around the side surface of the battery unit BU (especially, the left surface in this embodiment). As described above, since the duct part 72 is arranged between the second opening part 43L2 and the battery unit BU, air flowing around the side surface of the battery unit BU flows from the inlet part of the duct part 72 into the duct part 72. Air which flowed thereinto flows from the inlet part toward the outlet part 72d (in other words, from the right to the left) within the duct part 72. At this time, a part of air flowing through the duct part 72 (especially, air flowing through the lower part of the duct part 72) hits against the heat exchanger 64 to cool the heat exchanger 64. Air which flowed from the outlet part 72d flows toward the second opening part 43L2 and is evacuated from the second opening part 43L2 to the outer part 4f of the body. In this way, the duct part 72 structures a flow path in which air flowing through the inner part 4e of the body flows from the vicinity of the side surface of the battery unit BU toward the second opening part 43L2.

When air flowing around the battery unit BU is reliably evacuated to the outer part 4f of the body by the fan 71, the battery unit BU is reliably cooled. From the viewpoint of easily creating such an air flow, it is desired that the fan 71 is arranged opposite to the side surface of the battery unit BU (to the left surface in this embodiment).

When air flowing around the battery unit BU (especially around the left surface) easily flows toward the second opening part 43L2, air sucked from the first opening part 41a easily flows toward the battery unit BU and the battery unit BU is efficiently cooled. In order for air flowing around the battery unit BU to easily flow toward the second opening part 43L2, it is desired that the duct part 72 is provided between the second opening part 43L2 and the battery unit BU, as in this embodiment. In short, it is desired that the duct part 72 which is arranged between the second opening part 43L2 and the battery unit BU is provided in the inner part 4e of the body.

If the first electrical device E1 (the low-voltage battery 56 in this embodiment) can be arranged in the rear of the duct part 72 and in the left empty spaces of the battery unit BU, the above empty spaces can be effectively utilized as spaces to arrange the first electrical device E1, which is desired in this regard.

In this respect, as in this embodiment, it is desired that the first electrical device E1 is arranged opposite to the duct part 72 in the front-back direction of the body, and is arranged opposite to the battery unit BU in the left-right direction of the body. That is to say, it is desired that the first electrical device E1 is arranged opposite to the battery unit BU and the duct part 72.

### [4. Supplement]

In this embodiment, the structure that the first opening part 41a is provided immediately below (entirely below) the electric motor EM has been described); however, the position of the first opening part 41a is not limited to the above. For example, even when the first opening part 41a is provided so as to be displaced on the further front side than the position shown in FIG. 7, effects of this embodiment can be obtained as long as the first opening part 41a is located in the lower position than the electric motor EM.

In this embodiment, the structure that the second opening part 43L2 is provided in the left hood member 43L has been explained; however, the second opening part 43L2 may be provided in the right hood member. In this case, the arrangement of respective devices (the heat exchanger 64, the fan 71, for example) in the engine room 43 is opposite to the arrangement of this embodiment in the left-right direction.

In the first opening part 41a and the second opening part 43L2, a protective member (meshes, for example) may be attached as a safety measure. The above protective member is provided to prevent human hands or fingers from accidentally entering the body from the outside.

In this embodiment, the structure that comprises two fans 71 has been explained; however, the structure of the fan 71 is not limited to the above. As long as air (the volume of air) required for cooling respective devices in the engine room 43 (the heat exchanger 64, the electric motor EM, for example) is secured, the size and the number of the fan 71 may be set according to the necessary volume of air.

In this embodiment, the structure that the first electrical device E1 includes the low-voltage battery 56 has been explained; however, the first electrical device E1 may include the system controller 57.

In this embodiment, the structure that the second electrical device E2 includes the junction box 54 has been explained; however, the second electrical device E2 may include the charger 51 or may include the PDU 53.

In this embodiment, the hydraulic excavator 1 that is a construction machine has been described as an example of an electric work machine; however, the electric work machine is not limited to the hydraulic excavator 1 and may be a construction machine such as a wheel loader. In addition, the electric work machine may be an agricultural machine such as a combine harvester or a tractor.

### [5. Supplementary notes]

The hydraulic excavator 1 described in this embodiment can also be expressed as an electric work machine as described in the following supplementary notes.

An electric work machine of supplementary note (1)
has a body in which a first opening part and a second opening part are provided in an exterior part, and
comprises: in an inner part of the body,
a battery unit for charging power;
an electric motor which is driven by the power supplied from the battery unit;
a hydraulic pump which is driven by the electric motor to eject hydraulic oil;
a heat exchanger for cooling the hydraulic oil; and
a fan which sucks air from the first opening part into the inner part of the body and evacuates the air from the second opening part to an outer part of the body,
wherein the first opening part provided in the exterior part is located in a lower position than the electric motor.

According to an electric work machine of supplementary note (2), in the electric work machine according to supplementary note (1),
the first opening part is provided opposite to the electric motor.

According to an electric work machine of supplementary note (3), in the electric work machine according to supplementary note (1) or (2),
the battery unit is arranged opposite to the electric motor.

According to an electric work machine of supplementary note (4), in the electric work machine according to any one of supplementary notes (1) to (3),
the fan is arranged opposite to a side surface of the battery unit.

According to an electric work machine of supplementary note (5), in the electric work machine according to any one of supplementary notes (1) to (4),
the fan includes a first fan and a second fan,
the first fan and the second fan are arranged one on top of the other in an up-down direction, and
the heat exchanger is arranged between the first fan and the second opening part.

According to an electric work machine of supplementary note (6), in the electric work machine according to supplementary note (5),
the second fan is arranged opposite to the second opening part.

According to an electric work machine of supplementary note (7), in the electric work machine according to supplementary note (5) or (6),
the first fan is arranged below the second fan.

An electric work machine of supplementary note (8), in the electric work machine according to any one of supplementary notes (1) to (7),
has in the inner part of the body,
a duct part arranged between the second opening part and the battery unit.

An electric work machine of supplementary note (9), in the electric work machine according to supplementary note (8),
has in the inner part of the body,
a first electrical device electrically connected to the battery unit,
wherein the first electrical device is arranged opposite to the battery unit and the duct part.

An electric work machine of supplementary note (10), in the electric work machine according to supplementary note (9),
has in the inner part of the body,
a converter electrically connected to the battery unit,
wherein the first electrical device includes
a low-voltage battery electrically connected to the converter, and
the converter is arranged at one side in the up-down direction with respect to the low-voltage battery.

According to an electric work machine of supplementary note (11), in the electric work machine according to supplementary note (10),
the converter is supported on one side in a width direction of the body with respect to the battery unit and from a rear of the body.

According to an electric work machine of supplementary note (12), in the electric work machine according to any one of supplementary notes (1) to (11),
the electric motor is arranged below the battery unit.

An electric work machine of supplementary note (13), in the electric work machine according to supplementary note (12),
has: in the inner part of the body,
an inverter arranged opposite to the electric motor; and
a second electrical device electrically connected to the inverter,
wherein the second electrical device is arranged above the inverter and opposite to the battery unit.

According to an electric work machine of supplementary note (14), in the electric work machine according to any one of supplementary notes (1) to (13),
the exterior part includes a body frame located in a bottom part of the body, and
the first opening part is provided in the body frame.

According to an electric work machine of supplementary note (15), in the electric work machine according to any one of supplementary notes (1) to (14),
the exterior part includes a hood member located in a side part of the body, and
the second opening part is provided in the hood member.

The embodiment of the present invention has been described above; however, the scope of the present invention is not limited to this and may be expanded or modified without departing from the spirit of the invention.

### INDUSTRIAL APPLICABILITY

The present invention is available for an electric work machine such as a construction machine and an agricultural machine, for example.

### REFERENCE SIGNS LIST

1 hydraulic excavator (electric work machine)
4 upper structure (body)
4a bottom part
4b side part
4c exterior part
4e inner part
4f outer part
41 body frame
41a first opening part
43L left hood member (hood member)
43L2 second opening part
52 inverter
55 DC-DC converter (converter)
56 low-voltage battery (first electrical device)
61 hydraulic pump
64 heat exchanger
71 fan
71a first fan
71b second fan
72 duct part
BU battery unit
E1 first electrical device
E2 second electrical device
EM electric motor

## Claims

1. An electric work machine having a body in which a first opening part and a second opening part are provided in an exterior part,
the electric work machine comprising: in an inner part of the body,
a battery unit for charging power;
an electric motor which is driven by the power supplied from the battery unit;
a hydraulic pump which is driven by the electric motor to eject hydraulic oil;
a heat exchanger for cooling the hydraulic oil; and
a fan which sucks air from the first opening part into the inner part of the body and evacuates the air from the second opening part to an outer part of the body,
wherein the first opening part provided in the exterior part is located in a lower position than the electric motor.

2. The electric work machine according to claim 1, wherein the first opening part is provided opposite to the electric motor.

3. The electric work machine according to claim 1, wherein the battery unit is arranged opposite to the electric motor.

4. The electric work machine according to claim 1, wherein the fan is arranged opposite to a side surface of the battery unit.

5. The electric work machine according to claim 1, wherein the fan includes a first fan and a second fan,
the first fan and the second fan are arranged one on top of the other in an up-down direction, and
the heat exchanger is arranged between the first fan and the second opening part.

6. The electric work machine according to claim 5, wherein the second fan is arranged opposite to the second opening part.

7. The electric work machine according to claim 5, wherein the first fan is arranged below the second fan.

8. The electric work machine according to claim 1, having in the inner part of the body,
a duct part arranged between the second opening part and the battery unit.

9. The electric work machine according to claim 8, having in the inner part of the body,
a first electrical device electrically connected to the battery unit,
wherein the first electrical device is arranged opposite to the battery unit and the duct part.

10. The electric work machine according to claim 9, having in the inner part of the body,
a converter electrically connected to the battery unit,
wherein the first electrical device includes
a low-voltage battery electrically connected to the converter, and
the converter is arranged at one side in an up-down direction with respect to the low-voltage battery.

11. The electric work machine according to claim 10, wherein the converter is supported on one side in a width direction of the body with respect to the battery unit and from a rear of the body.

12. The electric work machine according to claim 1, wherein the electric motor is arranged below the battery unit.

13. The electric work machine according to claim 12, having: in the inner part of the body,
an inverter arranged opposite to the electric motor; and
a second electrical device electrically connected to the inverter,
wherein the second electrical device is arranged above the inverter and opposite to the battery unit.

14. The electric work machine according to claim 1, wherein the exterior part includes a body frame located in a bottom part of the body, and
the first opening part is provided in the body frame.

15. The electric work machine according to any one of claims 1 to 14, wherein the exterior part includes a hood member located in a side part of the body, and
the second opening part is provided in the hood member.
